# EUROPÄISCHE PATENTANMELDUNG

(11) **EP 3 372 078 A1**
(43) Veröffentlichungstag der Anmeldung: **12.09.2018**
(21) Anmeldenummer: 18401022.1
(22) Anmeldetag: 06.03.2018
(51) Int. Cl.: A01M 7/00

(54) **STEUERSYSTEM FÜR EINEN LANDWIRTSCHAFTLICHEN SPRÜHARM**

(30) Priorität: 08.03.2017 DE 102017104805
(71) Anmelder: Amazonen-Werke H. Dreyer GmbH & Co. KG, 49205 Hasbergen (DE)
(72) Erfinder: Austermann, Stefan, 48291 Telgte (DE); Oberheide, Friedrich, 49143 Bissendorf (DE); Klemann, Timo, 49191 Belm (DE); große Prues, Frank, 49593 Bersenbrück (DE); Heer, Jochen, 49074 Osnabrück (DE)

(57) **Zusammenfassung**

Die Erfindung betrifft ein Steuer- und/oder Regelsystem für ein landwirtschaftliches Nutzfahrzeug (1) mit einem Verteilergestänge (3) zum Ausbringen von Material, wie Düngemittel, Pflanzenschutzmittel oder Saatgut, welches sich quer zur Fahrtrichtung erstreckt und ein Mittelteil (4) und zwei mit dem Mittelteil (4) verbundene seitliche Ausleger (5 a,b) mit mehreren zueinander in Transportstellung einklappbaren und in Arbeitsstellung ausklappbaren, durch Gelenke verbundenen Gestängeabschnitten (6 a,m,i) aufweist. Die Gestängeabschnitte (6 a,m,i) weisen einen äußeren Gestängeabschnitt (6 a), einen inneren Gestängeabschnitt (6 i) und wenigstens einen mittleren Gestängeabschnitt (6 m) auf, der zwischen dem äußeren Gestängeabschnitt (6 a) und dem inneren Gestängeabschnitt (6 i) angeordnet ist. Jedem Gestängeabschnitt (6 a,m,i) ist eine Stelleinrichtung zugeordnet, wodurch das Verteilergestänge (3) von einer Transportstellung in eine Arbeitsstellung überführbar ist, und Düsen an den Gestängeabschnitten (6 a,m,i) angeordnet sind. Das System weist mehrere Sensoren und eine Datenverarbeitungseinheit auf, welche derart konfiguriert ist, dass die Signale der Sensoren verarbeitet werden und auf deren Basis ein Stellsignal für die Stelleinrichtung generiert wird. Eine Teilarbeitsbreite des Verteilergestänges (3) ist zumindest durch das Einklappen des mittleren Gestängeabschnitts (6 m) einstellbar, insbesondere automatisch einstellbar. Die Erfindung betrifft ferner ein landwirtschaftliches Nutzfahrzeug (1) und ein Verfahren zur Steuerung und/oder Regelung eines landwirtschaftlichen Nutzfahrzeuges (1).

## Beschreibung

Die Erfindung betrifft ein Steuer- und/oder Regelsystem für ein landwirtschaftliches Nutzfahrzeug gemäß dem Oberbegriff des Patentanspruchs 1. Derartige Systeme sind beispielhaft aus EP 25 10 784 B1 bekannt. Ferner betrifft die Erfindung ein landwirtschaftliches Nutzfahrzeug, sowie ein Verfahren zur Steuerung und/oder Regelung eines landwirtschaftlichen Nutzfahrzeuges.

Steuer- und/oder Regelsysteme werden für landwirtschaftliche Nutzfahrzeuge zum Ausbringen von Material, wie Düngemittel, Pflanzenschutzmittel oder Saatgut verwendet und weisen ein Verteilergestänge auf, welches sich quer zur Fahrtrichtung erstreckt. Das Verteilergestänge umfasst ein Mittelteil und zwei mit dem Mittelteil verbundene seitliche Ausleger mit mehreren zueinander durch einen Klappvorgang in Transportstellung einklappbaren und in Arbeitsstellung ausklappbaren, durch Gelenke verbundenen Gestängeabschnitte. Zum Ein-/Ausklappen der Ausleger, ist jedem Gestängeabschnitt eine hydraulische Einrichtung zugeordnet.

Das Ein- und Ausklappen der einzelnen Gestängeabschnitte lässt sich dadurch erreichen, dass dem Verteilergestänge eine Datenverarbeitungseinheit zugeordnet ist, welche derart konfiguriert ist, dass aufgrund der von Sensoren übermittelten Messsignale bezüglich der Stellung der einklappbaren Gestängeabschnitte zueinander, die jeweilige hydraulische Einrichtung zum Ein-/Ausklappen angesteuert wird. Das Verteilergestänge kann in der ausgeklappten Arbeitsstellung eine Arbeitsbreite von bis zu 50m umfassen.

Bei derart großen Arbeitsbreiten kommt darauf an, dass die Arbeitsbreite für die Bearbeitung unterschiedlicher landwirtschaftlicher Flächen verändert werden kann. Dies gilt auch für Verteilergestänge mit geringeren Arbeitsbreiten. Die flexible Anpassung der Arbeitsbreite an unterschiedliche landwirtschaftliche Flächen erfolgt im Stand der Technik durch die Einstellung von Teilarbeitsbreiten. Dazu werden einzelne Gestängeabschnitte des Verteilergestänges eingeklappt, um die Gesamtbreite des Verteilergestänges, also die Arbeitsbreite zu verringern. Hierfür muss vom Anwender manuell ermittelt werden, welche Arbeitsbreite benötigt wird und welche Gestängeabschnitte hierfür ggf. eingeklappt werden müssen.

In der Regel sind die seitlichen Ausleger des Verteilergestänges jeweils durch mehrere Gestängeabschnitte gebildet, die aus äußeren, mittleren und inneren Gestängeabschnitten gebildet sind. Die mittleren Gestängeabschnitte sind zwischen den äußeren Gestängeabschnitten und inneren Gestängeabschnitten des Verteilergestänges angeordnet.

Beim Ausklappen des Verteilergestänges aus der Transportposition in die Arbeitspositionen kommt bei dem bekannten Steuer- und/oder Regelsystem eine hydraulische Folgeschaltung zur Regelung des Klappvorgangs zum Einsatz. Dabei werden zuerst die inneren Gestängeabschnitte von der Zentralhydraulik angesteuert und klappen aus. Im vollständig ausgeklappten Zustand des inneren Gestängeabschnitts wird ein Schaltventil betätigt, das Hydrauliköl zum Ausklappen des mittleren Gestängeabschnitts freigibt. Der vollständig ausgeklappte mittlere Gestängeabschnitt betätigt ein weiteres Schaltventil, woraufhin der äußere Gestängeabschnitt ausklappt.

Um das Verteilergestänge aus der Arbeitsposition in die Transportposition zu bringen, wird der äußere Gestängeabschnitt von der Zentralhydraulik angesteuert und klappt ein. Im vollständig eingeklappten Zustand wird ein Schaltventil betätigt, das zum Einklappen des mittleren Gestängeabschnitts Hydrauliköl freigibt. Der eingeklappte mittlere Gestängeabschnitt betätigt ein weiteres Schaltventil, das das Einklappen des inneren Gestängeabschnitts bewirkt.

Für die Einstellung der Teilarbeitsbreite muss zuerst der äußere Gestängeabschnitt eingeklappt werden. Dadurch wird die Möglichkeit eingeschränkt, unterschiedliche Teilarbeitsbreiten einzustellen.

Der Erfindung liegt die Aufgabe zugrunde, ein Regel- und/oder Steuersystem anzugeben, das die Bearbeitung von landwirtschaftlichen Flächen durch ein Verteilergestänge verbessert, das in eine Arbeitsposition mit einer Teilarbeitsbreite überführt ist. Der Erfindung liegt ferner die Aufgabe zugrunde, ein landwirtschaftliches Nutzfahrzeug sowie ein Verfahren zur Steuerung und/oder Regelung eines landwirtschaftlichen Nutzfahrzeugs anzugeben.

Erfindungsgemäß wird die Aufgabe mit Blick auf das Regel- und/oder Steuersystem durch den Gegenstand des Anspruchs 1 gelöst. Alternativ wird diese Aufgabe durch den Gegenstand des nebengeordneten Anspruchs 6 gelöst.

Mit Blick auf das landwirtschaftliche Nutzfahrzeug wird die Aufgabe durch den Gegenstand des Anspruchs 9 gelöst. Hinsichtlich des Verfahrens wird die Aufgabe durch den Gegenstand des Anspruchs 10 und alternativ durch den Gegenstand des nebengeordneten Anspruchs 11 gelöst.

Die Erfindung beruht auf dem Gedanken, ein Steuer- und/oder Regelsystem für ein landwirtschaftliches Nutzfahrzeug mit einem Verteilergestänge zum Ausbringen von Material, wie Düngemittel, Pflanzenschutzmittel oder Saatgut, anzugeben, welches sich quer zur Fahrtrichtung erstreckt und ein Mittelteil aufweist. Mit dem Mittelteil sind zwei seitliche Ausleger mit mehreren zueinander in Transportstellung einklappbaren und in Arbeitsstellung ausklappbaren, durch Gelenke verbundenen Gestängeabschnitten verbunden. Die Gestängeabschnitte weisen einen äußeren Gestängeabschnitt, einen inneren Gestängeabschnitt und wenigstens einen mittleren Gestängeabschnitt auf, der zwischen dem äußeren Gestängeabschnitt und dem inneren Gestängeabschnitt angeordnet ist. Jedem Gestängeabschnitt ist eine Stelleinrichtung zugeordnet, wodurch das Verteilergestänge von einer Transportstellung in eine Arbeitsstellung überführbar ist. An den Gestängeabschnitten sind Düsen angeordnet. Das System weist mehrere Sensoren und eine Datenverarbeitungseinheit auf, welche derart konfiguriert ist, dass die Signale der Sensoren verarbeitet werden und auf deren Basis ein Stellsignal für die Stelleinrichtung generiert wird. Eine Teilarbeitsbreite des Verteilergestänges ist zumindest durch das Einklappen des mittleren Gestängeabschnitts einstellbar, insbesondere automatisch einstellbar. Es kann optional, insbesondere zusätzlich, das Ausklappen des äußeren Gestängeabschnitts vorgesehen sein.

Im Unterschied zum Stand der Technik ermöglicht die Erfindung die Einstellung einer Teilarbeitsbreite durch Einklappen des mittleren Gestängeabschnitts und Ausklappen des äußeren Gestängeabschnitts. Im Stand der Technik kann die Teilarbeitsbreite wegen der Folgehydraulik nur durch das Einklappen des äußeren Gestängeabschnitts eingestellt werden. Die Erfindung erhöht die Anzahl der möglichen Kombinationen ein- und ausgeklappter Gestängeabschnitte und damit die Anzahl unterschiedlicher Teilarbeitsbreiten, die durch das erfindungsgemäße Steuer- und/oder Regelsystem einstellbar sind. Die Vielseitigkeit der Einsatzmöglichkeiten eines entsprechend ausgerüsteten, landwirtschaftlichen Nutzfahrzeugs wird dadurch verbessert.

Die durch Einklappen des mittleren Gestängeabschnitts und Ausklappen des äußeren Gestängeabschnitts möglichen Kombinationen ein- und ausgeklappter Gestängeabschnitte können durch die im Stand der Technik bekannten Kombinationen erweitert werden, bei denen die äußeren Gestängeabschnitte eingeklappt werden. Dadurch ergibt sich eine noch größere Anzahl an Kombinationsmöglichkeiten, um unterschiedliche Teilarbeitsbreiten einzustellen.

Im Rahmen der Erfindung wird unter einem äußeren Gestängeabschnitt ein Gestängeabschnitt verstanden, der bezogen auf das Mittelteil in Längsrichtung des Verteilergestänges weiter außen angeordnet ist, als der mittlere Gestängeabschnitt oder der innere Gestängeabschnitt. Umgekehrt ist der innere Gestängeabschnitt bezogen auf das Mittelteil in Längsrichtung des Verteilergestänges weiter innen angeordnet als der äußere Gestängeabschnitt oder der mittlere Gestängeabschnitt.

Beispielsweise kann der äußere Gestängeabschnitt das freie, äußere Ende des Verteilergestänges bilden. Der innere Gestängeabschnitt kann mit dem Mittelteil verbunden sein. Im Rahmen der Erfindung ist es möglich, dass ein einziger mittlerer Gestängeabschnitt vorgesehen ist. Es können mehrere mittlere Gestängeabschnitte, beispielsweise zwei oder drei mittlere Gestängeabschnitte vorgesehen sein, die zwischen dem äußeren Gestängeabschnitt und dem inneren Gestängeabschnitt angeordnet sind.

Daraus ergeben sich weitere Kombinationsmöglichkeiten ein- und ausgeklappter Gestängeabschnitte, wodurch die Anzahl der möglichen Teilarbeitsbreiten erhöht wird.

Eine weitere Möglichkeit, die Teilarbeitsbreite zu variieren besteht darin, unterschiedlich lange Gestängeabschnitte vorzusehen.

Das erfindungsgemäße Steuer- und/oder Regelsystem nach dem nebengeordneten Anspruch 8 unterscheidet sich von dem erfindungsgemäßen Steuer- und/oder Regelsystem nach Anspruch 1 dadurch, dass eine Teilarbeitsbreite des Verteilergestänges durch das Einklappen und Ausklappen unmittelbar angrenzender Gestängeabschnitte einstellbar ist. Die Datenverarbeitungseinheit ist derart konfiguriert, dass die Düsen eines der beiden unmittelbar angrenzenden Gestängeabschnitte automatisch abschaltbar sind.

Im Teilarbeitsmodus sind eingeklappte und unmittelbar angrenzende Gestängeabschnitte in Fahrtrichtung hintereinander, insbesondere parallel hintereinander, angeordnet. Die Düsen der unmittelbar angrenzenden Gestängeabschnitte bilden zwei in Fahrtrichtung hintereinander angeordnete Reihen. Die Abschaltung der Düsen eines der beiden unmittelbar angrenzenden Gestängeabschnitte im Teilarbeitsmodus hat den Vorteil, dass eine unerwünschte Doppelbesprühung der landwirtschaftlichen Fläche vermieden wird. Besonders bevorzugt ist es, wenn die Abschaltung automatisch erfolgt, weil dann die Einstellungen der Teilarbeitsbreite einschließlich der korrekten Düseneinstellung vollautomatisch erfolgen kann. Außerdem werden dadurch mögliche Bedienungsfehler minimiert.

Die Abschaltung der Düsen unmittelbar angrenzender Gestängeabschnitte wird unabhängig von dem erfindungsgemäßen Klappmuster zu Einstellung einer Teilarbeitsbreite offenbart und beansprucht.

Die Abschaltung der Düsen unmittelbar angrenzender Gestängeabschnitte kann mit dem erfindungsgemäßen Steuer- und/oder Regelsystem nach Anspruch 1 kombiniert werden, um im Zusammenhang mit dem erfindungsgemäßen Klappmuster zu Einstellung der Teilarbeitsbreite das Risiko einer fehlerhaften Mehrfachausbringung von Material zu vermeiden.

Bevorzugte Ausführungsformen der Erfindung sind in den Unteransprüchen angegeben.

In einer bevorzugten Ausführungsform sind die Sensoren derart ausgebildet und/oder im angrenzenden Bereich an den jeweiligen Gestängeabschnitt angeordnet, dass eine Position und/oder eine Winkelstellung des jeweiligen Gestängeabschnitts erfassbar ist. Die Sensoren sind vorzugsweise als Potentiometer, insbesondere als Linearpotentiometer oder als Drehpotentiometer ausgebildet. Vorzugsweise kann eine Winkelabweichung vom Sollwert der ausgeklappten Position der Gelenke der Gestängeabschnitte ermittelt werden.

Die Klappposition der Ausleger kann elektronisch erfasst werden. Anhand in der Software hinterlegter und kalibrierter Schaltpunkte werden die einzelnen Ventile zu den Gestängeabschnitten angesteuert. Dies hat einen Vorteil bei der Klappung, da mehrere Gestängeabschnitte gleichzeitig geklappt werden. Es muss nicht gewartet werden, bis der vorherige Gestängeabschnitt vollständig ausgeklappt ist.

Vorzugsweise ist die Datenverarbeitungseinheit derart konfiguriert, dass die Einstellung der Teilarbeitsbreite des Verteilergestänges und die Abschaltung der Düsen durch eine einzige Benutzereingabe oder automatisch erfolgt. Dies hat den Vorteil, dass das Verteilergestänge sicher und schnell bedient werden kann. Insbesondere ist also vorgesehen, dass die Datenverarbeitungseinheit aus einer vorgewählten Arbeitsbreite ermittelt, welche Gestängeabschnitte zur Einstellung dieser Arbeitsbreite ausgeklappt werden müssen. Die Datenverarbeitungseinheit klappt dann selbsttätig nur die für diese Arbeitsbreite benötigten Gestängeabschnitte aus bzw. die nichtbenötigten Gestängeabschnitte durch Ansteuerung der Stelleinrichtungen ein. Mit anderen Worten werden durch die Datenverarbeitungseinheit in Abhängigkeit einer eingegebenen bzw. hinterlegten Teilarbeitsbreite die Gestängeabschnitte derart ein bzw. ausgeklappt, dass die gewünschte Teilarbeitsbreite eingestellt wird. Die Datenverarbeitungseinheit kann beispielsweise aus einem Jobrechner an der Feldspritze und/oder einem Bedienterminal in einer Kabine eines die Feldspritze ziehenden Schleppers oder auch nur aus einer dieser Komponente bestehen oder wahlweise auch weitere Komponenten umfassen.

Das Eingeben bzw. Hinterlegen der Teilarbeitsbreite erfolgt vorzugsweise durch eine Eingabe des entsprechenden Wertes für die Teilarbeitsbreite durch den Benutzer in ein Terminal. Alternativ kann die Teilarbeitsbreite durch in der Datenverarbeitungseinheit hinterlegte Bearbeitungskarten und/oder Feldkarten und/oder Fahrspursysteme automatisch ermittelt werden.

Bei einer bevorzugten Ausführung umfassen die Sensoren Abstandssensoren zur Erfassung des Abstandes zwischen dem Verteilergestänge und dem Boden und/oder Bestand, wobei die Datenverarbeitungseinheit derart konfiguriert ist, dass die Abstandssensoren eines eingeklappten Gestängeabschnitts automatisch abschaltbar sind. Dadurch wird das Risiko einer Falschmessung verringert. Außerdem wird vermieden, dass unnötige Sensordaten erzeugt werden.

Die Datenverarbeitungseinheit kann derart konfiguriert sein, dass eine eingestellte Teilarbeitsbreite des Verteilergestänges an einen Taskcontroller oder an ein automatisches Lenksystem des landwirtschaftlichen Nutzfahrzeugs automatisch übermittelbar ist. Dadurch wird die automatisierte Bearbeitung landwirtschaftlicher Flächen weiter verbessert. Zusätzlich oder alternativ kann eine gewünschte Soll-Teilarbeitsbreite von dem Taskcontroller oder automatischen Lenksystem an die Datenverarbeitungseinheit zurückgemeldet werden und als Reaktion darauf von dieser die Ist-Teilarbeitsbreite an die Soll-Teilarbeitsbreite durch entsprechende Ansteuerung der Stelleinrichtungen anangepasst werden.

Im Rahmen der Erfindung wird ein landwirtschaftliches Nutzfahrzeug zum Ausbringen von Material, wie Düngemittel, Pflanzenschutzmittel oder Saatgut offenbart und beansprucht, das ein Steuer- und/oder Regelsystem nach einem der vorhergehenden Ansprüche aufweist.

Hinsichtlich der Vorteile des Nutzfahrzeugs sowie der beiden Verfahren zur Steuerung und/oder Regelung des landwirtschaftlichen Nutzfahrzeugs wird auf die Erläuterungen im Zusammenhang mit dem Regel- und/oder Steuersystem verwiesen.

In die Erfindung wird mit weiteren Merkmalen und Einzelheiten unter Bezug auf die beigefügten schematischen Zeichnungen anhand von Ausführungsbeispielen näher erläutert.

In diesen zeigen
- Fig. 1: eine perspektivische Ansicht eines landwirtschaftlichen Nutzfahrzeugs mit einem Steuer- und/oder Regelungssystem, dessen Verteilergestänge sich in der Transportstellung befindet;
- Fig. 2: das Nutzfahrzeug gemäß Fig. 1 mit vollständig ausgeklapptem Verteilergestänge in der Arbeitsposition;
- Fig. 3: das Nutzfahrzeug gemäß Fig. 1 mit teilweise ausgeklapptem Verteilergestänge, wobei die äußersten Gestängeabschnitte eingeklappt sind (Teilarbeitsbreiteneinstellung nach dem Stand der Technik)
- Fig. 4: das Nutzfahrzeug gemäß Fig. 1, bei dem die Teilarbeitsbreite nach einem erfindungsgemäßen Ausführungsbeispiel eingestellt ist;
- Fig. 5: das Nutzfahrzeug gemäß Fig. 1, bei dem die Teilarbeitsbreite nach dem Stand der Technik eingestellt ist;
- Fig. 6: eine rückwärtige Ansicht des Nutzfahrzeugs gemäß Fig. 1, bei dem der rechte äußere Gestängeabschnitt eingeklappten ist und
- Fig. 7: weitere Varianten von Klappmustern nach einem erfindungsgemäßen Ausführungsbeispiel.

In der nachfolgenden Beschreibung werden für gleiche und gleichwirkende Teile dieselben Bezugszeichen verwendet.

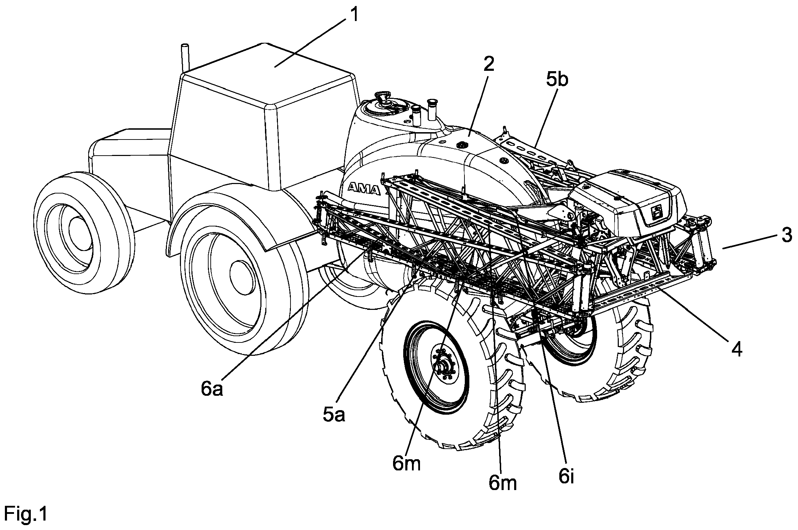

Fig. 1 zeigt eine schematische Draufsicht eines erfindungsgemäßen Steuer- und/oder Regelsystems für ein landwirtschaftliches Nutzfahrzeug 1 mit einem Verteilergestänge 3 zum Ausbringen von Material, wie Düngemittel, Pflanzenschutzmittel oder Saatgut nach einem ersten Ausführungsbeispiel. Das Verteilergestänge 3 ist über einen Anhänger 2 an das landwirtschaftliche Nutzfahrzeug 1 gekoppelt und mittels einer Aufhängevorrichtung am Anhänger 2 angebracht.

Das Verteilergestänge 3 erstreckt sich quer zur Fahrtrichtung und weist ein Mittelteil 4 und zwei seitliche Ausleger 5 a,b auf, welche mit dem Mittelteil 4 verbunden sind. Die Ausleger 5 weisen mehrere durch einen Klappvorgang in Transportstellung einklappbare und in Arbeitsstellung ausklappbare Gestängeabschnitte 6 a,m,i auf. Die Gestängeabschnitte 6 a,m,i sind mittels Gelenken miteinander verbunden. Das Verteilergestänge 3 ist beispielhaft in der vollständig eingeklappten Transportstellung gezeigt.

Jedem Gestängeabschnitt 6 a,m,i ist eine nicht dargestellte hydraulische Einrichtung zugeordnet, wodurch das Verteilergestänge 3 von einer Transportstellung in eine Arbeitsstellung und umgekehrt überführbar ist. Die hydraulische Einrichtung kann beispielhaft einen doppeltwirkenden Hydraulikzylinder aufweisen.

Das System weist mehrere nicht dargestellte Sensoren auf. Die Sensoren sind als Potentiometer, beispielsweise als Linearpotentiometer oder Drehpotentiometer, ausgebildet und im angrenzenden Bereich an den jeweiligen Gestängeabschnitt 6 a,m,i angeordnet. Die Potentiometer sind also jeweils den Gelenken zwischen zwei zueinander einklappbaren Gestängeabschnitten 6 a,m,i zugeordnet und somit zwischen zwei zueinander einklappbaren Gestängeabschnitten 6 a,m,i angeordnet. Alternativ können die Potentiometer der jeweiligen hydraulischen Einrichtung zugeordnet sein und eine Arbeitsstellung des Hydraulikzylinders ermitteln. Dabei kann die Arbeitsstellung des Hydraulikzylinders der Position der Kolbenstange des Hydraulikzylinders entsprechen.

Demnach kann mittels der Potentiometer sowohl eine Endlage oder eine Zwischenlage, bzw. Zwischenstellung der Gelenke der Gestängeabschnitte 6 a,m,i ermittelt werden. Somit können Rückschlüsse gezogen werden, ob die Gelenke noch starr miteinander verbunden sind und in der Arbeitsstellung gehalten sind.

Die Potentiometer erfassen hierbei eine Position und/oder eine Winkelstellung zwischen zwei benachbart liegenden Gestängeabschnitten 6 a,m,i zueinander. Über Datenleitungen oder kabellos können die Messsignale der Potentiometer hinsichtlich der jeweiligen Position der Gestängeabschnitte 6 a,m,i an eine nicht dargestellte elektronische Datenverarbeitungseinheit übermittelt werden, welche mit einem im Nutzfahrzeug 1 angeordneten Bordcomputer verbunden sein kann. Die Datenverarbeitungseinheit ist derart konfiguriert, dass die Signale der Sensoren verarbeitet werden und auf deren Basis ein Stellsignal für die hydraulische Einrichtung generiert wird.

Anhand in der Software hinterlegter und kalibrierter Schaltpunkte werden die einzelnen Ventile zu den Gestängeabschnitten 6 a,m,i angesteuert. Dies ist bei der Klappung vorteilhaft, da mehrere Gestängeabschnitte 6 a,m,i gleichzeitig geklappt werden. Es muss nicht gewartet werden, bis der vorherige Gestängeabschnitt 6 a,m,i vollständig ausgeklappt ist.

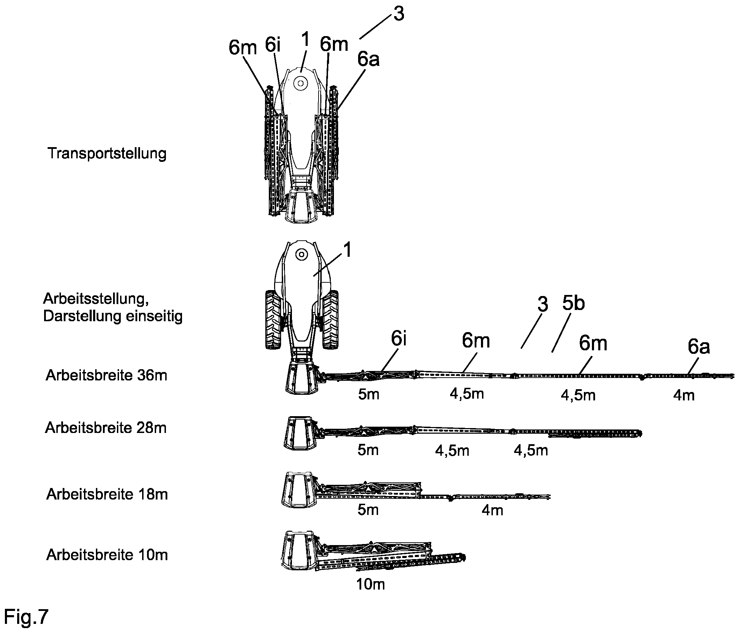

Wie in Fig. 7 schematisch dargestellt, können mit dem Steuer- und/oder Regelsystem verschiedene Klappstellungen eingestellt werden, die zu unterschiedlichen Teilarbeitsbreiten führen. Die unterschiedlichen Klappstellungen werden durch die Datenverarbeitungseinheit gesteuert, die entsprechend konfiguriert ist. Mit anderen Worten weist das Ausführungsbeispiel gemäß Fig. 7 eine Datenverarbeitungseinheit auf, die so konfiguriert ist, dass unterschiedliche Klappstellungen der beiden seitlichen Ausleger 5 a,b des Verteilergestänges 3 durch entsprechende Ansteuerung der hydraulischen Einrichtung möglich sind. Wenigstens eine dieser Klappstellungen ist dadurch gekennzeichnet, dass die Teilarbeitsbreite des Verteilergestänges 3 durch das Einklappen des mittleren Gestängeabschnitts 6 m und durch das Ausklappen des äußeren Gestängeabschnitts 6 a eingestellt ist. Zusätzlich können andere Klappstellungen durch die Datenverarbeitungseinheit eingestellt werden, die zu anderen Teilarbeitsbreiten führen. Darunter können auch Klappstellungen sein, die an sich aus dem Stand der Technik bekannt sind. Es kommt im Rahmen der Erfindung und bei dem Ausgangsbeispiel gemäß Fig. 7 darauf an, dass wenigstens eine der durch entsprechende Konfiguration der Datenverarbeitungseinheit ermöglichten Klappstellungen einen eingeklappten, mittleren Gestängeabschnitt 6 m und ausgeklappten, äußere Gestängeabschnitt 6 a zur Einstellung der Teilarbeitsbreite bildet.

Die Teilarbeitsbreite ist in der Arbeitsstellung relevant, in der zumindest ein Teil der Düsen des Verteilergestänges 3 aktiviert ist oder zumindest die Aktivierung der Düsen ansteht.

Fig. 7 zeigt die Draufsicht eines landwirtschaftlichen Nutzfahrzeuges 1, das im vorliegenden Ausführungsbeispiel als Feldspritze ausgebildet ist. Dabei werden unterschiedliche Klappstellungen des Verteilergestänges 3 verglichen. Aus Gründen der besseren Übersicht ist nur der rechte seitliche Ausleger 5b des Verteilergestänges 3 dargestellt. Der Ausleger 5b weist vier Gestängeabschnitte 6 a,m,i auf. Eine andere Anzahl von Gestängeabschnitten 6 a,m,i ist möglich. Konkret umfasst das Verteilergestänge 3 einen inneren Gestängeabschnitt 6 i, gefolgt von zwei mittleren Gestängeabschnitten 6 m, gefolgt von einem äußeren Gestängeabschnitt 6 a. Die beiden mittleren Gestängeabschnitte 6 m sowie die inneren und äußeren Gestängeabschnitte 6 i,a weisen jeweils unterschiedliche Gestängelängen auf. Die beiden mittleren Gestängeabschnitte 6 m weisen dieselbe Gestängelänge auf. Der innere Gestängeabschnitt 6 i weist eine Länge von 5m, die beiden mittleren Gestängeabschnitte 6 m eine Länge von jeweils 4,5m und der äußere Gestängeabschnitt 6 a eine Länge von 4m auf. Die Länge der Gestängeabschnitte 6 a,m,i nimmt hier beispielhaft mit zunehmendem Abstand von der Feldspritze ab. Andere Längen sind möglich.

In der oberen Darstellung ist die Transportstellung gezeigt. In der Transportstellung ist das Verteilergestänge 3 vollständig eingeklappt und befindet sich seitlich an der Feldspritze. Die einzelnen Gestängeabschnitte 6 a,m,i sind im eingeklappten Zustand seitlich nebeneinander angeordnet und bilden ein kompaktes Gestängepaket.

Die mit der Arbeitsbreite 36m gekennzeichnete Klappstellung entspricht dem vollständig ausgeklappten Verteilergestänge 3. Die Gestängeabschnitte 6 a,m,i sind in Längsrichtung des Auslegers 5b hintereinander angeordnet und fluchten.

Die mit der Teilarbeitsbreite 28m gekennzeichnete Klappstellung entspricht einer im Stand der Technik an sich bekannten Klappstellung, bei der der äußere Gestängeabschnitt 6 a eingeklappt ist. Die übrigen Gestängeabschnitte 6 m,i sind ausgeklappt. Der korrespondierende linke Ausleger ist entsprechend eingeklappt.

Die mit der Teilarbeitsbreite 18m gekennzeichnete Klappstellung entspricht einem erfindungsgemäßen Ausführungsbeispiel, bei dem der äußere Gestängeabschnitt 6 a ausgeklappt ist. Die beiden mittleren Gestängeabschnitte 6 m sind eingeklappt. Der innere Gestängeabschnitt 6 i ist ausgeklappt. Damit bilden der innere Gestängeabschnitt 6 i und die beiden mittleren Gestängeabschnitte 6 m ein Gestängepaket.

Die Gestängeabschnitte 6 a,m,i des korrespondierenden linken Auslegers sind entsprechend geklappt.

Die mit der Teilarbeitsbreite 10m gekennzeichnete Klappstellung entspricht einem erfindungsgemäßen Ausführungsbeispiel, bei dem der äußere Gestängeabschnitt 6 a eingeklappt ist. Die beiden mittleren Gestängeabschnitte 6 m sind ebenso eingeklappt. Der innere Gestängeabschnitt 6 i ist ausgeklappt. Damit bilden der innere Gestängeabschnitt 6 i, die beiden mittleren Gestängeabschnitte 6 m sowie der äußere Gestängeabschnitt 6 a ein Gestängepaket.

Die nicht dargestellte Datenverarbeitungseinrichtung ist so konfiguriert, dass die Teilarbeitsbreiten 18m und 10m, bei denen der äußere Gestängeabschnitt 6 a eingeklappt und wenigstens ein mittlerer Gestängeabschnitt 6 m ausgeklappt sind, durch entsprechende Steuerung der hydraulischen Einrichtung eingestellt werden können. Zusätzlich ist die Datenverarbeitungseinrichtung so programmiert, dass auch dem Stand der Technik an sich bekannte Klappstellungen (siehe Arbeitsbreite 28m) möglich sind.

Weitere Ausführungsbeispiele der Erfindung sind in Figuren 1 bis 6 dargestellt.

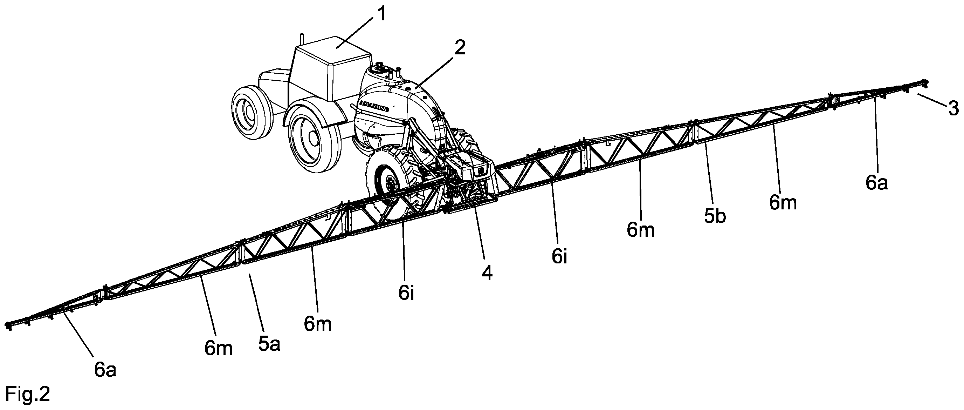

In Fig. 1 ist ein als Feldspritze ausgebildetes, landwirtschaftliches Nutzfahrzeug 1 gezeigt. Bei der Feldspritze handelt es sich um eine gezogene Feldspritze. Die Erfindung ist auf Anbauspritzen sowie selbstfahrende Feldspritzen anwendbar, die über Verteilergestänge 3 mit einer entsprechenden Breite verfügen. Das Verteilergestänge 3 gemäß Fig. 1 weist zwei seitliche Ausleger 5 a,b auf, die an einem Mittelteil 4 befestigt sind. Die seitlichen Ausleger 5 a,b sind jeweils aus einem inneren, zwei mittleren und einem äußeren Gestängeabschnitt 6 a,m,i zusammengesetzt. Das Verteilergestänge 3 gemäß Fig. 1 befindet sich in der seitlichen Transportstellung. Andere Arten von Transportstellungen, beispielsweise senkrecht geklappte Gestänge sind denkbar. Fig. 2 zeigt das Verteilergestänge 3 gemäß Fig. 1 in der vollständig ausgeklappten Stellung. Zwischen den einzelnen Gestängeabschnitten 6 a,m,i sind Gelenke angeordnet sowie Hydraulikzylinder, die die hydraulische Stelleinrichtung bildet. Die einzelnen Gestängeabschnitte 6 a,m,i werden durch entsprechend zugeordnete Hydraulikzylinder bewegt. Die Arbeitsbreite der in Fig. 2 gezeigten Klappstellung beträgt 36m.

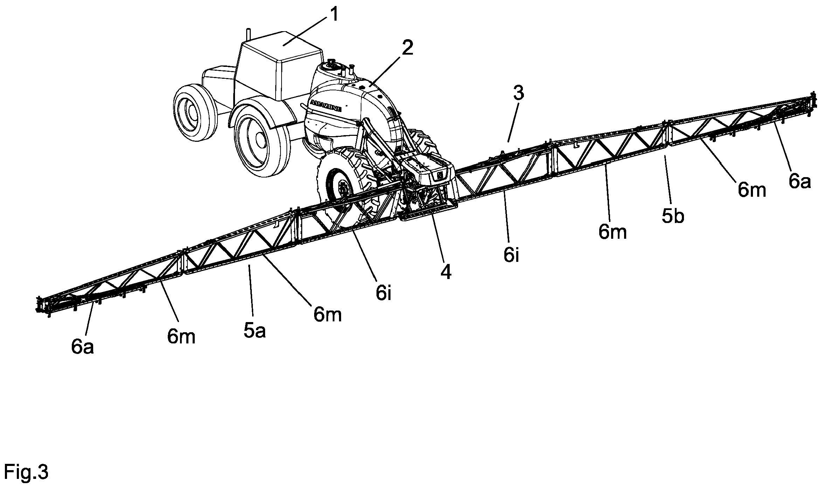

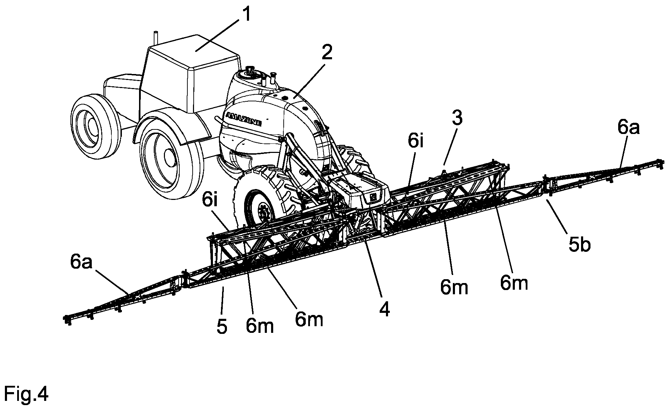

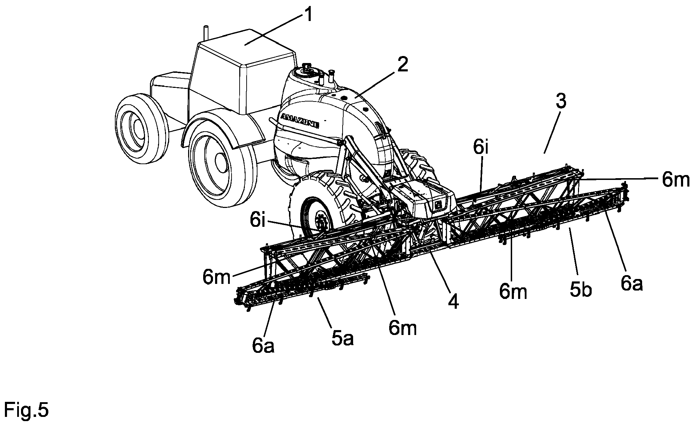

Die Teilarbeitsbreite von 28m wird durch Einklappen der äußeren Gestängeabschnitte 6 a erreicht, wie in Fig. 3 dargestellt. Die Teilarbeitsbreite von 18m gemäß Fig. 4 wird durch Ausklappen der beiden äußeren Gestängeabschnitte 6 a sowie durch Einklappen der mittleren Gestängeabschnitte 6 m eingestellt. Die Teilarbeitsbreite von 10m gemäß Fig. 5 wird ausgehend von der in Fig. 4 gezeigten Teilarbeitsstellung durch weiteres Einklappen der äußeren Gestängeabschnitte 6 a eingestellt.

Die Datenverarbeitungseinrichtung, die für die Einstellung der jeweiligen Teilarbeitsbreite verantwortlich ist, ist so konfiguriert, dass zumindest die ausgeklappten, äußeren Gestängeabschnitte 6 a kombiniert mit wenigstens einem eingeklappten mittleren Gestängeabschnitt 6 m möglich sind.

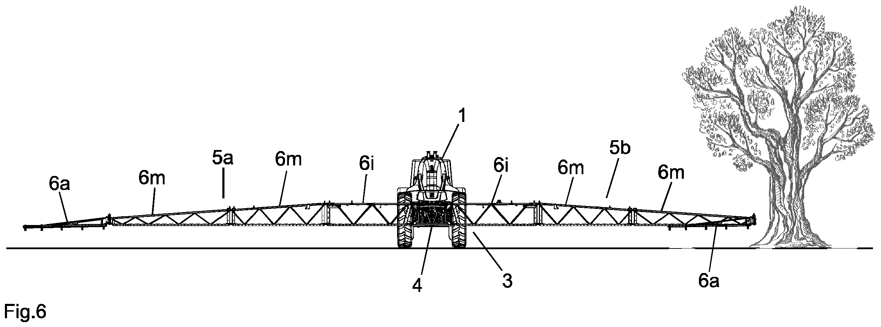

Wie in Fig. 6 gezeigt, ist es auch möglich, einzelne Gestängeabschnitte, im Fall des Beispiels gemäß Fig. 6 den rechten, äußeren Gestängeabschnitt 6 a einzuklappen, so dass das Verteilergestänge 3 asymmetrisch geklappt ist. Dadurch können Hindernisse umgangen werden oder Randbereiche von landwirtschaftlichen Flächen effektiver bearbeitet werden. Eine solche Teilarbeitsbreiteneinstellung war im Prinzip auch bereits im Stand der Technik einstellbar, jedoch musste hierfür der Ausklappvorgang bzw. Einklappvorgang durch einen Bedienvorgang des Benutzers manuell unterbrochen werden. Es musste also manuell durch den Benutzer mittels einer Betätigungsvorrichtung der Einklappvorgang gestartet und in einem zweiten Schritt im richtigen Moment durch einen zweiten Betätigungsvorgang der Einklappvorgang unterbrochen werden. Hierfür musste typischerweise der mittels einer Folgeschaltung gesteuerte Einklappvorgang beobachtet werden und der Einklappvorgang beendet werden, wenn der erste Gestängeabschnitt eingeklappt war, jedoch der daran anschließende Klappvorgang noch nicht gestartet war. Erfindungsgemäß ist nun vorgesehen, dass mittels eines einzigen Betätigungsvorganges, beispielsweise eines Tastendrucks, der nur der äußerste Gestängeabschnitt einklappbar ist. Hierfür kann beispielsweise vorgesehen sein, dass an der Datenverarbeitungseinheit eine Taste zum Einklappen des äußersten Gestängeabschnitts des linken Auslegers und eine zweite Taste zum Einklappen des äußersten Gestängeabschnitts des rechten Auslegers vorgesehen ist. Durch einen zweiten Druck auf die jeweilige Taste kann beispielsweise dann das Ausklappen des jeweils eingeklappten Abschnitts gestartet werden.

Alternativ ist vorgesehen, dass die Datenverarbeitungseinheit selbständig erkennt, wenn beispielsweise ein äußerer Gestängeabschnitt 6 a eingeklappt werden muss, um ein Hindernis zu passieren. Hierfür wird vorzugsweise die momentane Position mittels eines GPS-Empfängers durch die Datenverarbeitungseinheit ermittelt. Die Gestängebreite ist in der Datenverarbeitungseinheit hinterlegt, so dass durch einen Abgleich von momentaner Position, der Bewegungsrichtung, der Gestängebreite und in einer Feldkarte hinterlegter Hindernisse mögliche Kollisionen vorherberechnet werden können. Der entsprechende Gestängeabschnitt 6 a wird dann durch die Datenverarbeitungseinheit eingeklappt und die entsprechenden Düsen abgeschaltet, um eine Kollision mit dem Hindernis und eine Doppelbearbeitung durch das Einklappen zu verhindern.

Zudem ist denkbar, dass in der Datenverarbeitungseinheit hinterlegt ist, welche Gestängeabschnitte während der Fahrt geklappt werden können, beispielsweise die äußeren Gestängeabschnitte 6 a und welche nur beim Stillstand der Feldspritze bewegt werden dürfen, um Beschädigungen an dem Spritzgestänge zu vermeiden, beispielsweise die mittleren Gestängeabschnitte 6 m und die inneren Gestängeabschnitte 6 i.
Die Datenverarbeitungseinrichtung ist weiterhin so konfiguriert, dass die Düsen der in Fahrtrichtung nebeneinander angeordneten eingeklappten Gestängeabschnitte 6 a,m,i teilweise deaktiviert sind. Konkret sind die Düsen so deaktiviert, dass eine Doppelbesprühung aufgrund der in Reihen nebeneinander angeordneten Düsen vermieden wird.

Die Abstandssensoren der eingeklappten Gestängeabschnitte 6 a,m,i sind abgeschaltet, um Fehlmessungen bzw. unnötige Mehrfachmessungen zu vermeiden.

Vorzugsweise erfolgt die Einstellung der Teilarbeitsbreiten durch eine einzige Bedienereingabe, durch die die gewünschte Teilarbeitsbreite gewählt wird. Die Datenverarbeitungseinheit ist dabei so programmiert, dass dabei alle Einzelschritte automatisch erfolgen, d.h. die Überführung des Verteilergestänges 3 in die Arbeitsstellung mit entsprechend ein- bzw. ausgeklappten Gestängeabschnitten 6 a,m,i für die Teilarbeitsbreite. Außerdem werden die nebeneinander angeordneten Düsen zur Vermeidung der Doppelbesteuerung sowie die Abstandssensoren der eingeklappten Gestängeabschnitte 6 a,m,i automatisch deaktiviert.

### Bezugszeichenliste

- 1: landwirtschaftliches Nutzfahrzeug
- 2: Anhänger
- 3: Verteilergestänge
- 4: Mittelteil
- 5 a,b: Ausleger
- 6 a,m,i: Gestängeabschnitt

## Patentansprüche

1. Steuer- und/oder Regelsystem für ein landwirtschaftliches Nutzfahrzeug (1) mit einem Verteilergestänge (3) zum Ausbringen von Material, wie Düngemittel, Pflanzenschutzmittel oder Saatgut, welches sich quer zur Fahrtrichtung erstreckt und ein Mittelteil (4) und zwei mit dem Mittelteil (4) verbundene seitliche Ausleger (5 a,b) mit mehreren zueinander in Transportstellung einklappbaren und in Arbeitsstellung ausklappbaren, durch Gelenke verbundenen Gestängeabschnitten (6 a,m,i) aufweist, wobei
- die Gestängeabschnitte (6 a,m,i) einen äußeren Gestängeabschnitt (6 a), einen inneren Gestängeabschnitt (6 i) und wenigstens einen mittleren Gestängeabschnitt (6 m) aufweisen, der zwischen dem äußeren Gestängeabschnitt (6 a) und dem inneren Gestängeabschnitt (6 i) angeordnet ist,
- jedem Gestängeabschnitt (6 a,m,i) eine Stelleinrichtung zugeordnet ist, wodurch das Verteilergestänge (3) von einer Transportstellung in eine Arbeitsstellung überführbar ist, und
- Düsen an den Gestängeabschnitten (6 a,m,i) angeordnet sind,
und wobei das System mehrere Sensoren und eine Datenverarbeitungseinheit aufweist, welche derart konfiguriert ist, dass die Signale der Sensoren verarbeitet werden und auf deren Basis ein Stellsignal für die Stelleinrichtung generiert wird,
**dadurch gekennzeichnet, dass**
eine Teilarbeitsbreite des Verteilergestänges (3) zumindest durch das Einklappen des mittleren Gestängeabschnitts (6 m) einstellbar, insbesondere automatisch einstellbar ist.

2. System nach Anspruch 1
**dadurch gekennzeichnet, dass** eine Teilarbeitsbreite des Verteilergestänges (3) zusätzlich durch Ausklappen des äußeren Gestängeabschnitts (6 a) einstellbar ist.

3. System nach Anspruch 1 oder 2
**dadurch gekennzeichnet, dass**
die die Sensoren derart ausgebildet und/oder im angrenzenden Bereich an den jeweiligen Gestängeabschnitt (6 a,m,i) angeordnet sind, dass eine Position und/oder eine Winkelstellung des jeweiligen Gestängeabschnitts (6 a,m,i) erfassbar ist.

4. System nach einem der Ansprüche 1 bis 3
**dadurch gekennzeichnet, dass**
die Teilarbeitsbreite des Verteilergestänges (3) durch das Einklappen und Ausklappen unmittelbar angrenzender Gestängeabschnitte (6 a,m,i) einstellbar ist, wobei die Datenverarbeitungseinheit derart konfiguriert ist, dass die Düsen eines der beiden unmittelbar angrenzenden Gestängeabschnitte (6 a,m,i) automatisch abschaltbar sind.

5. System nach Anspruch 4
**dadurch gekennzeichnet, dass**
die Datenverarbeitungseinheit derart konfiguriert ist, dass die Einstellung der Teilarbeitsbreite des Verteilergestänges (3) und die Abschaltung der Düsen durch eine einzige Benutzereingabe oder automatisch erfolgt.

6. System nach einem der Ansprüche 1 bis 5
**dadurch gekennzeichnet, dass**
die Sensoren Abstandssensoren zur Erfassung des Abstandes zwischen dem Verteilergestänge (3) und dem Boden und/oder Bestand umfassen, wobei die Datenverarbeitungseinheit derart konfiguriert ist, dass die Abstandssensoren eines eingeklappten Gestängeabschnitts (6 a,m,i) automatisch abgeschaltbar sind.

7. System nach einem der Ansprüche 1 bis 6
**dadurch gekennzeichnet, dass**
die Datenverarbeitungseinheit derart konfiguriert ist, dass eine eingestellte Teilarbeitsbreite des Verteilergestänges (3) an einen Taskcontroller oder an ein automatisches Lenksystem des landwirtschaftlichen Nutzfahrzeugs (1) automatisch übermittelbar ist.

8. Steuer- und/oder Regelsystem für ein landwirtschaftliches Nutzfahrzeug (1) mit einem Verteilergestänge (3) zum Ausbringen von Material, wie Düngemittel, Pflanzenschutzmittel oder Saatgut, welches sich quer zur Fahrtrichtung erstreckt und ein Mittelteil (4) und zwei mit dem Mittelteil (4) verbundene seitliche Ausleger (5 a,b) mit mehreren zueinander in Transportstellung einklappbaren und in Arbeitsstellung ausklappbaren, durch Gelenke verbundenen Gestängeabschnitten (6 a,m,i) aufweist, wobei
- die Gestängeabschnitte (6 a,m,i) einen äußeren Gestängeabschnitt (6 a), einen inneren Gestängeabschnitt (6 i) und wenigstens einen mittleren Gestängeabschnitt (6 m) aufweisen, der zwischen dem äußeren Gestängeabschnitt (6 a) und dem inneren Gestängeabschnitt (6 i) angeordnet ist,
- jedem Gestängeabschnitt (6 a,m,i) eine Stelleinrichtung zugeordnet ist, wodurch das Verteilergestänge (3) von einer Transportstellung in eine Arbeitsstellung überführbar ist, und
- Düsen an den Gestängeabschnitten (6 a,m,i) angeordnet sind,
und wobei das System mehrere Sensoren und eine Datenverarbeitungseinheit aufweist, welche derart konfiguriert ist, dass die Signale der Sensoren verarbeitet werden und auf deren Basis ein Stellsignal für die Stelleinrichtung generiert wird,
**dadurch gekennzeichnet, dass**
eine Teilarbeitsbreite des Verteilergestänges (3) durch das Einklappen und Ausklappen unmittelbar angrenzender Gestängeabschnitte (6 a,m,i) einstellbar ist, wobei die Datenverarbeitungseinheit derart konfiguriert ist, dass die Düsen eines der beiden unmittelbar angrenzenden Gestängeabschnitte (6 a,m,i) automatisch abschaltbar ist.

9. Landwirtschaftliches Nutzfahrzeug (1) zum Ausbringen von Material, wie Düngemittel, Pflanzenschutzmittel oder Saatgut mit einem Steuer- und/oder Regelsystem nach einem der vorhergehenden Ansprüche.

10. Verfahren zur Steuerung und/oder Regelung eines landwirtschaftlichen Nutzfahrzeugs (1) mit einem Verteilergestänge (3) zum Ausbringen von Material, wie Düngemittel, Pflanzenschutzmittel oder Saatgut, welches sich quer zur Fahrtrichtung erstreckt und ein Mittelteil (4) und zwei mit dem Mittelteil (4) verbundene seitliche Ausleger (5 a,b) mit mehreren zueinander in Transportstellung einklappbaren und in Arbeitsstellung ausklappbaren, durch Gelenke verbundenen Gestängeabschnitten (6 a,m,i) aufweist, wobei
- die Gestängeabschnitte (6 a,m,i) einen äußeren Gestängeabschnitt (6 a), einen inneren Gestängeabschnitt (6 i) und wenigstens einen mittleren Gestängeabschnitt (6 m) aufweisen, der zwischen dem äußeren Gestängeabschnitt (6 a) und dem inneren Gestängeabschnitt (6 i) angeordnet ist,
- das Verteilergestänge (3) von einer Transportstellung in eine Arbeitsstellung durch Stelleinrichtungen überführt wird, die den Gestängeabschnitten (6 a,m,i) zugeordnet sind, und
- Düsen an den Gestängeabschnitten (6 a,m,i) angeordnet sind,
wobei das System mehrere Sensoren und eine Datenverarbeitungseinheit aufweist, die die Signale der Sensoren verarbeitet und auf deren Basis ein Stellsignal für die Stelleinrichtung generiert,
**dadurch gekennzeichnet, dass**
eine Teilarbeitsbreite des Verteilergestänges (3) zumindest durch das Einklappen des mittleren Gestängeabschnitts (6 m) eingestellt wird, insbesondere automatisch eingestellt wird.

11. Verfahren zur Steuerung und/oder Regelung eines landwirtschaftlichen Nutzfahrzeugs (1) mit einem Verteilergestänge (3) zum Ausbringen von Material, wie Düngemittel, Pflanzenschutzmittel oder Saatgut, welches sich quer zur Fahrtrichtung erstreckt und ein Mittelteil (4) und zwei mit dem Mittelteil (4) verbundene seitliche Ausleger (5 a,b) mit mehreren zueinander in Transportstellung einklappbaren und in Arbeitsstellung ausklappbaren, durch Gelenke verbundenen Gestängeabschnitten (6 a,m,i) aufweist, wobei
- die Gestängeabschnitte (6 a,m,i) einen äußeren Gestängeabschnitt (6 a), einen inneren Gestängeabschnitt (6 i) und wenigstens einen mittleren Gestängeabschnitt (6 m) aufweisen, der zwischen dem äußeren Gestängeabschnitt (6 a) und dem inneren Gestängeabschnitt (6 i) angeordnet ist,
- das Verteilergestänge (3) von einer Transportstellung in eine Arbeitsstellung durch Stelleinrichtungen überführt wird, die den Gestängeabschnitten (6 a,m,i) zugeordnet sind, und
- Düsen an den Gestängeabschnitten (6 a,m,i) angeordnet sind,
wobei das System mehrere Sensoren und eine Datenverarbeitungseinheit aufweist, die die Signale der Sensoren verarbeitet und auf deren Basis ein Stellsignal für die Stelleinrichtung generiert,
**dadurch gekennzeichnet, dass**
eine Teilarbeitsbreite des Verteilergestänges (3) durch das Einklappen und Ausklappen unmittelbar angrenzender Gestängeabschnitte (6 a,m,i) eingestellt wird und die Datenverarbeitungseinheit die Düsen eines der beiden unmittelbar angrenzenden Gestängeabschnitte (6 a,m,i) automatisch abschaltet.
